# EUROPEAN PATENT APPLICATION

(11) **EP 1 780 073 A2**
(43) Date of publication of application: **02.05.2007**
(21) Application number: 06022580.2
(22) Date of filing: 30.10.2006
(51) Int. Cl.: B60N 2/30

(54) **Motor vehicle folding seat**

(30) Priority: 28.10.2005 IT MI20052070
(71) Applicant: Isringhausen S.p.A., 28060 S. Pietro Mosezzo, Frazione di Nibbia (NO) (IT)
(72) Inventor: Tirapelle, Luigi, 10036 Settimo Torinese (TO) (IT); Caimi, Alessandro, 28078 Romagnano Sesia (NO) (IT)
(74) Representative: Premru, Rok

(57) **Abstract**

The present invention relates to a folding motor vehicle seat having a seat support structure, a back support structure hinged to the seat support structure, a pair of connecting rods, a pair of cams, reversible lock means for locking motion of the back support structure in a completely raised position.

## Description

A motor vehicle folding seat, particularly for use in passenger and cargo vans, is hereby disclosed.

A process for bringing a motor vehicle seat level with a load floor, to increase load space, is also disclosed.

To increase load space in motor vehicles, and particularly in passenger and cargo vans, the passenger seat adjacent the driver seat has a folding seat construction, for forming a bearing surface flush with the load floor of the motor vehicle.

Such a folding seat is provided, for instance, in the multipurpose van "Connect", which is currently manufactured and sold by Ford.

However prior art folding seats are affected by certain drawbacks.

Complex operations are required to change the seat configuration.

For example, the passenger seat in the "Connect" vehicle requires sequential rotation of the seat, the headrest and the backrest.

Furthermore, this solution requires a considerable operating space, thereby reducing the space available for other purposes.

The folding seat disclosed hereinafter has the object to obviate at least some of prior art problems, and particularly those set out hereinbefore.

A possible embodiment of a seat as defined in the attached claims, will be described hereinafter with reference to the enclosed drawings, where:

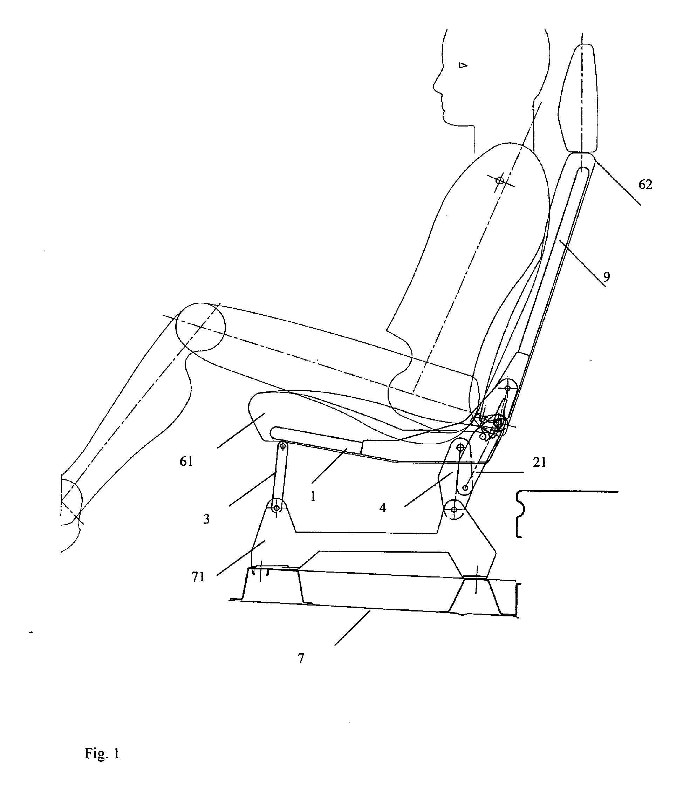

- Fig. 1 is a schematic view of a car seat during normal operation;
- Fig. 2 is a schematic view of the seat of Fig. 1 folded into an intermediate position;
- Fig. 3 shows the seat of Fig. 1 in a completely folded position;
- Fig. 3a is an enlarged view of a detail of Fig. 3;

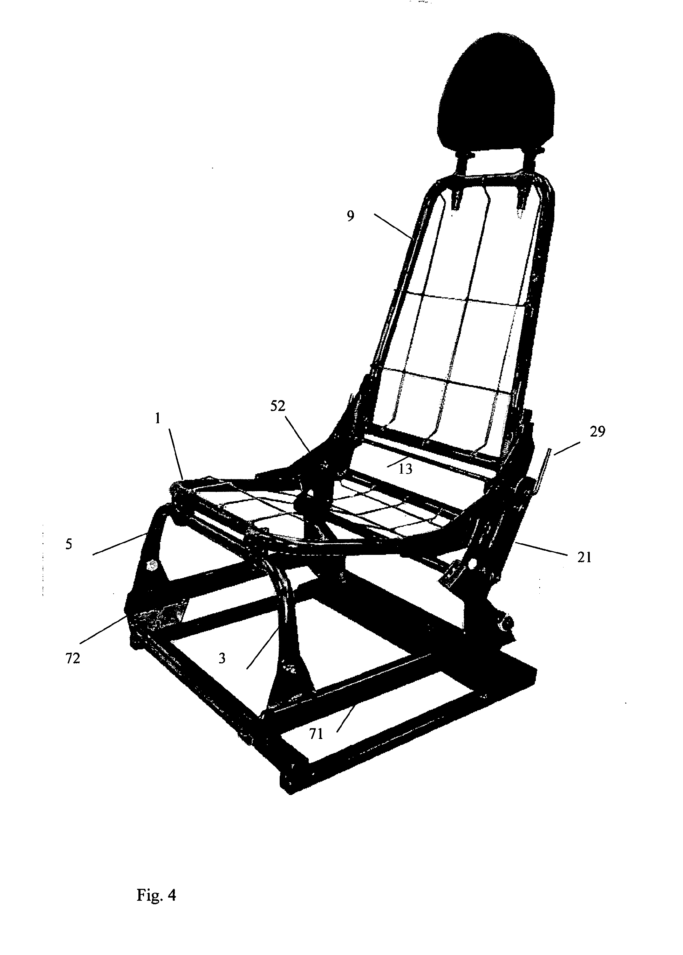

- Fig. 4 is a perspective view of the seat;

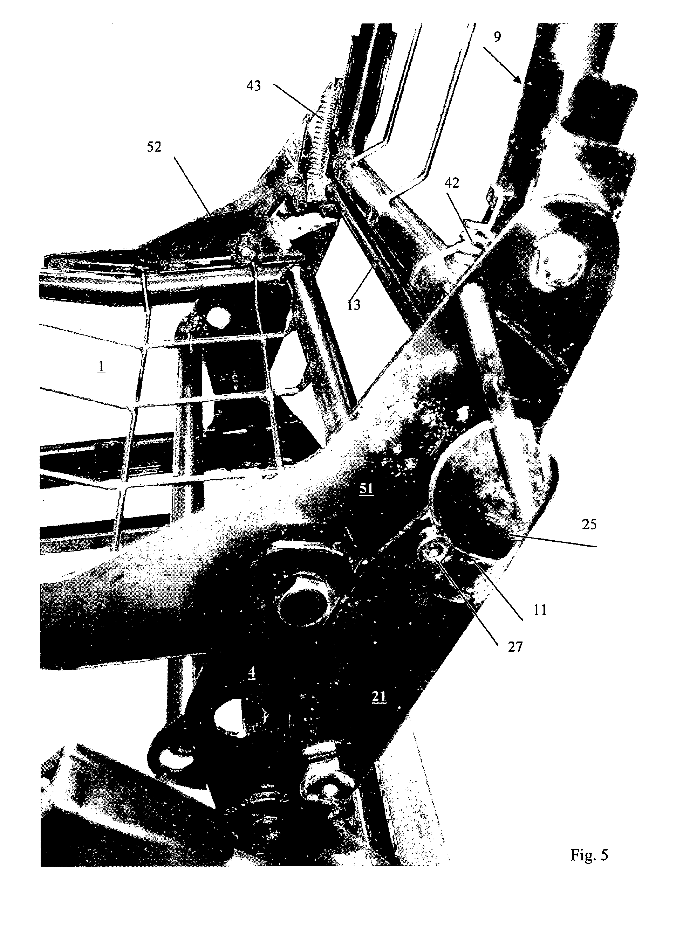

- Fig. 5 is a perspective view of a first detail of the seat of Fig. 4;

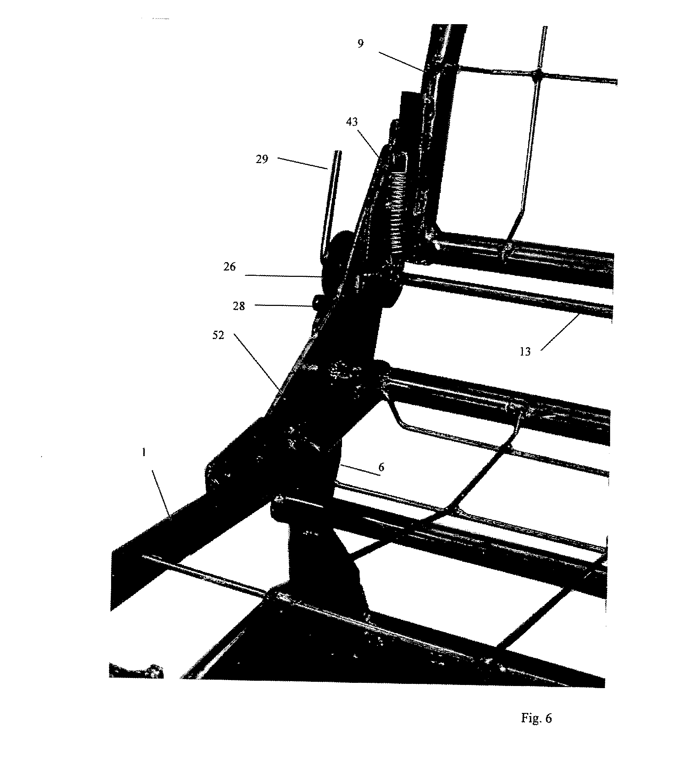

- Fig. 6 is a perspective view of a second detail of the seat of Fig. 4;

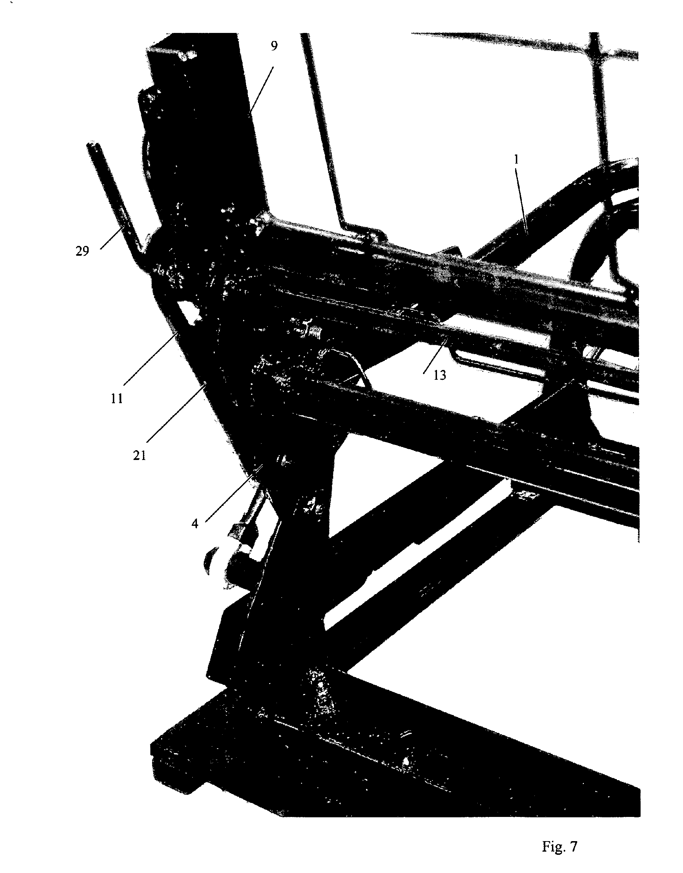

- Fig. 7 is a perspective view of a third detail of the seat of Fig. 4; and

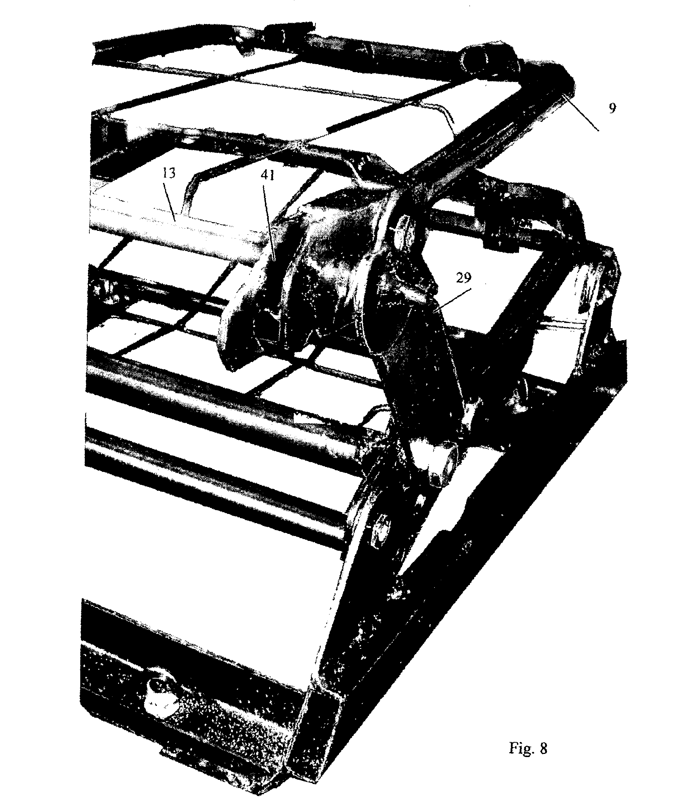

- Fig. 8 is a perspective view of a fourth detail of the seat of Fig. 4.

Referring to the drawings, the illustrated folding motor vehicle seat comprises a seat support structure 1, essentially made of a tubular member substantially and/or generally of square shape and a wire grid, supporting a cushion or padding, thereby forming a seat portion 61.

The seat support structure is hinged to two parallel pairs of rocker arms 3, 4; 5, 6 that define, with the seat support structure, two articulated parallelograms 1, 3, 4; 1, 5, 6 which are designed to be hinged to brackets 71, 72 secured to a motor vehicle floor 73, e.g. molded plates bolted on cross members welded on the motor vehicle floor.

The two articulated parallelograms 1, 3, 4; 1, 5, 6 allow the seat structure 1, and thence the whole seat, to be lowered by a rototranslational motion, during which the seat structure 1 and the seat cushion maintain a substantially horizontal orientation.

Due to structural strength requirements, the front rocker arms 3, 5 of the two articulated parallelograms 1, 3, 4; 1, 5, 6 are made of a single tube bent into a C - shape.

A back support structure 9 is then provided, which is essentially made of a tubular member, substantially and/or generally of trapezoidal shape, and of a wire grid for supporting a padding, and thereby forming a backrest 62.

The back support structure 9 is hinged to the seat support structure I to allow rotation of the back support structure 9 relative to the seat support structure 1.

A pair of connecting rods 21, 22 are hinged in an intermediate point of the rear rocker arms 4, 6 of the two articulated parallelograms 1, 3, 4; 1, 5, 6 and connect the rear rocker arms 4, 6 of the articulated parallelograms with the back support structure 9.

In practice, the back structure 9 forms a first class lever that rotating downwards synchronously controls the rototranslational motion of the seat support structure 1 which starts to move forwardly down.

In order to connect the connecting rods 21, 22 to the back support structure 9, the connecting rods have a slot - like hole 11, 12, for accommodating a transverse pin 13, rotably coupled to the back support structure 9, which terminates at least at one end with a handle or lever 29.

According to the embodiment displayed in the figures annexed to the description, the seat support 1 comprises a pair of parallel plates 51, 52 of generally and/or substantially triangular shape, with the rear rocker arms 4, 6 of the two parallelograms 1, 3, 4; 1, 5, 6 and the back support structure 9 hinged thereto.

In a preferred embodiment, each plate 51, 52 has a trimmed portion for the passage of the transverse pin 13.

A pair of cams 25, 26 are integral with the transverse pins 13, and engage a contrast member 27; 28 (e.g. a peg projecting from the connecting rods 21; 22).

The cams 25, 26 can be actuated by rotating the handle 29, against return elastic means 42; 43 (e.g. helical traction springs).

In the rest position, the cams 25, 26 hold the articulation point of the transverse pin 13 fixed, thereby maintaining synchronization between the rotation of the back support structure 9 and the rototranslational motion of the seat support structure 1.

Reversible lock means 40, 41 are further provided for holding the back support structure 9 in a locked position when in ordinary passenger use (completely raised); said means may be actuated when the seat has to be folded and lowered.

Preferably, the reversible lock means 40, 41 include two hooks 40, 41 integral with the transverse pin 13, which rotate against the same elastic return means 42, 43 of the cams 25, 26.

The hooks 40, 41 are adapted to engage special pegs integral with the plates 51, 52.

Thanks to the connecting rods 21, 22, one hand movement may be sufficient to lower the back support structure by rotating it to a substantially horizontal orientation, parallel to the seat support structure, and to simultaneously drive the seat support structure forwardly down.

In other words, after rotating the handle 29 with one hand, the user may push the other hand against the backrest and cause the backrest to be lowered by folding it against the seat and simultaneously driving the seat forwardly down.

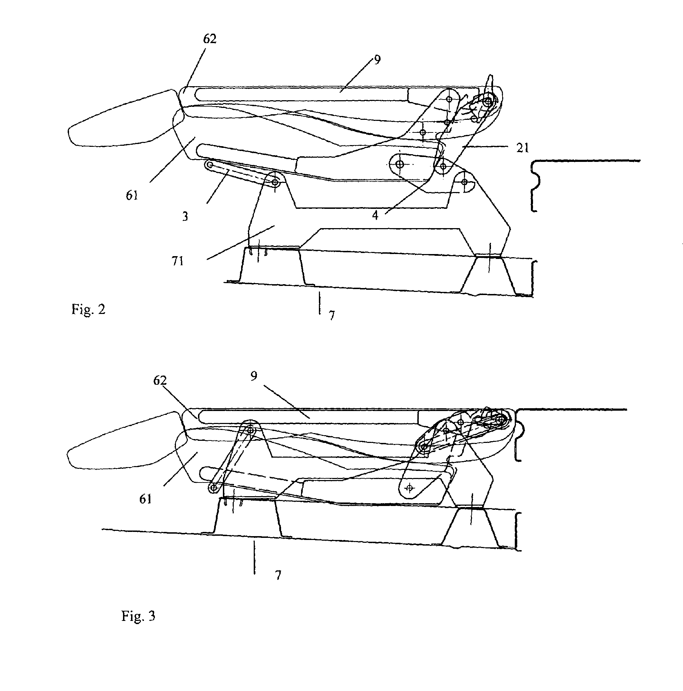

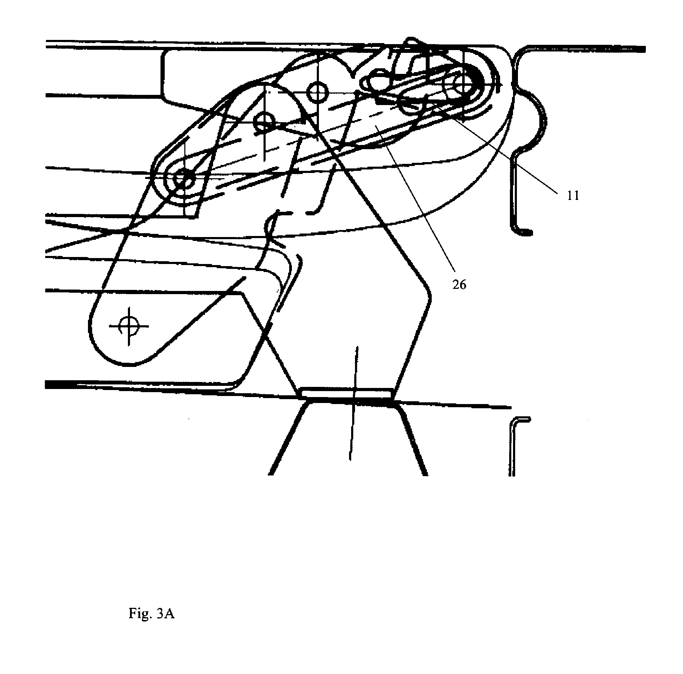

At the end of this operation, the seat is folded into an intermediate position in which the top side of the seat is above the load platform of the vehicle (see Fig. 2).

This configuration is advantageous when the user wants to use the folded seat as a support for notebooks, tools or instruments such as laptop computers.

By operating the handle 29, the cams 25, 26 may be rotated to release the articulation point of the transverse pin 13, thereby allowing the transverse pin 13 to freely slide in the direction of extension of the slot-like hole 11.

This way, synchronization between the rototranslational motion of the seat support structure 1 and the rotation of the back support structure 9 is broken, whereby the seat support structure 1 may be further rototranslated, whereas the back structure 9 remains parallel to the seat support structure 1.

In this second step, the seat moves backwardly down until it is substantially flush with the load floor (Fig. 3).

During this second step, the transverse pin 13 runs along the slot - like holes 11, 12 from one end to the other and back, thus causing the springs 40, 41 to exert their return action on the cams 21, 22, that thereby lock the seat.

In the preferred embodiment, the rocker arms 3, 4; 5, 6 have an overall stroke of 143° to 163°.

Preferably, the rocker arms of each articulated parallelogram are further interconnected by another rod (not shown) parallel to the seat support structure 1.

This feature prevents any seat locking problem during the raising step. The above seat may be equipped with elastic means (not shown) acting against the rototranslational motion of the seat support structure 1 and the back support structure 9.

This feature allows the seat to be restored to its intermediate position by simply rotating the handle 29.

The seat is brought from the intermediate position back to its passenger operation position by lifting the backrest 62.

By this hand movement, the seat portion 61 is also simultaneously raised.

The above seat may be folded back and lowered by carrying out a process comprising the steps of:
- unlocking the backrest and the seat, by rotating the handle 29;
- rotating the backrest forwards with respect to the seat until the backrest reaches a substantially horizontal position and synchronously rototranslating the seat to move it forwardly down, while maintaining a substantially horizontal seat orientation;
- breaking the synchronism between the backrest and the seat by rotating again the handle 29;
- rototranslating the backrest and the seat to continue the downward motion in a backward direction, while maintaining a substantially horizontal orientation thereof.

## Claims

1. Motor vehicle folding seat comprising
- a seat support structure (1) that defines, together with two parallel pairs of rocker arms (3, 4; 5, 6), two articulated parallelograms (1, 3, 4; 1, 5, 6) which are designed to be hinged to means for attachment thereof to a motor vehicle floor (7), to allow a downward rototranslational motion of said seat support structure 1 relative to the motor vehicle floor;
- a back support structure (9), hinged to said seat support structure (1) to allow rotation of said back support structure (9) relative to said back support structure (1);
- a pair of connecting rods (21, 22) which connect each of said articulated parallelograms (1, 3, 4; 1, 5, 6) with said back support structure (9) to rotate the back support structure (9) synchronously with the rototranslational motion of the seat support structure (1), each of said connecting rods (21, 22) having a slot - like hole (11, 12) for accommodating a transverse pin (13) rotably coupled with said seat structure (9) which terminates at least at one end in a handle portion (29);
- a pair of cams (25, 26), integral with said transverse pin (13), whose rotation may be controlled by said handle (29) against elastic return means (42, 43), said pair of cams (25, 26) engaging a contrast member (27, 28) connected to said connecting rods (21, 22), said cams (25, 26) having a first portion for maintaining the articulation point of the transverse pin (13) substantially fixed, and thus maintaining synchronization between the rotation of the back support structure (9) and the rototranslational motion of the seat support structure (1), to allow said back support structure (9) to be lowered to a substantially horizontal orientation, said cams (25, 26) further having a second portion, shaped in a manner to release the articulation point of said transverse pin (13), thereby allowing the transverse pin (13) to freely slide in the direction of extension of said slot - like hole (11), thereby breaking the synchronization between the rototranslational motion of said seat support structure (1) and the rotation of said back support structure (1) and allowing rototranslational motion of the seat structure (1) and the back structure (9);
- reversible lock means (40) for locking the motion of said back support structure (9) in a completely raised position.

2. A folding seat as claimed in claim 1, wherein said reversible lock means (40, 41) comprise at least one hook (40, 41) integral with said transverse pin (13), whose rotation may be controlled by said handle (29) and opposes the action of said return elastic means (42, 43).

3. A folding seat as claimed in any one of the preceding claims, wherein each of said pairs of connecting rods (3, 4; 5, 6) of each articulated parallelogram (1, 3, 4; 1, 5, 6) is further connected to an additional rod (15, 16) parallel to the seat support structure (1).

4. A folding seat as claimed in any one of the preceding claims, wherein elastic means are provided which operate against the rototranslational motion of said seat support structure (1) and said back support structure (1).

5. A folding seat as claimed in any one of the preceding claims, wherein said seat support structure (1) comprises a pair of parallel plates (51, 52) of generally and/or substantially triangular shape, with said rear rocker arms (4, 6) of said two parallelograms (1, 3, 4; 1, 5, 6) and said back support structure (9) hinged thereto.

6. A process for bringing the backrest of a passenger seat level with a load platform, comprising the steps of:
- simultaneously unlocking the backrest (62) and the seat portion (61);
- rotating the backrest (62) forwards with respect to the seat portion (61) until the backrest (62) reaches a substantially horizontal position and synchronously rototranslating the seat portion (61) to move it forwardly down, while maintaining a substantially horizontal orientation of the seat portion (61);
- simultaneously rototranslating the backrest (62) and the seat portion (61) to continue the downward motion in a backward direction, while maintaining a substantially horizontal orientation thereof;
- locking the backrest (62) and the seat portion (61).
